# EUROPÄISCHE PATENTSCHRIFT

(11) **EP 3 157 786 B1**
(45) Veröffentlichungstag und Bekanntmachung des Hinweises auf die Patenterteilung: **06.03.2019**
(21) Anmeldenummer: 15729421.6
(22) Anmeldetag: 11.06.2015
(51) Int. Cl.: B60R 99/00

(54) **FAHRZEUG MIT UMFELDÜBERWACHUNGSEINRICHTUNG SOWIE VERFAHREN ZUM BETREIBEN EINER SOLCHEN ÜBERWACHUNGSEINRICHTUNG**
VEHICLE WITH SURROUNDINGS-MONITORING DEVICE AND METHOD FOR OPERATING SUCH A MONITORING DEVICE
VÉHICULE COMPRENANT UN DISPOSITIF DE SURVEILLANCE DE L'ENVIRONNEMENT ET PROCÉDÉ PERMETTANT DE FAIRE FONCTIONNER UN DISPOSITIF DE SURVEILLANCE DE L'ENVIRONNEMENT DE CE TYPE

(30) Priorität: 20.06.2014 DE 102014108684
(43) Veröffentlichungstag der Anmeldung: 26.04.2017
(73) Patentinhaber: KNORR-BREMSE Systeme für Nutzfahrzeuge GmbH, 80809 München (DE)
(72) Erfinder: NEMETH, Huba, H-1116 Budapest (HU); GYÖRI, Marton, H-1136 Budapest (HU); SZÖLLÖSI, Adam, H-4030 Debrecen (HU)
(86) Internationale Anmeldenummer: PCT/EP2015/063000
(87) Internationale Veröffentlichungsnummer: WO 2015/193158

(56) Entgegenhaltungen:
- EP-A1- 3 081 433
- WO-A1-2016/164756
- DE-A1- 10 035 223
- DE-A1-102012 014 448
- US-A1- 2013 113 923

## Beschreibung

Die Erfindung betrifft ein Fahrzeug mit einer die Umgebung des Fahrzeugs überwachenden Umfeldüberwachungseinrichtung gemäß dem Oberbegriff von Anspruch 1. Die Erfindung betrifft auch ein Verfahren zum Betreiben einer Umfeldüberwachungseinrichtung eines Fahrzeugs gemäß Anspruch 8.

Ein Fahrzeug mit einer Umfeldüberwachungseinrichtung ist beispielsweise aus DE 10 2012 014 448 A1 bekannt. Dort sind jeweils im Nahbereich einer Seitentüre eines Fahrerhauses eines Nutzfahrzeugs und in Längsrichtung des Fahrzeugs gesehen etwa auf Position der Seitenspiegel Kameras angeordnet, welche in Ergänzung zu den Seitenspiegeln Bilder von in Bezug zu den Seitenspiegeln rückwärtigen Objekten aufnehmen, welche sich im Umfeld der beiden Seitenflächen des Nutzfahrzeugs befinden. Die aufgenommenen Bilder werden von einer Bildwiedergabeeinrichtung im Fahrerhaus dargestellt.

Eine gattungsgemäßes Fahrzeug und ein gattungsgemäßes Verfahren sind in US 2013/113923A1 offenbart.

Der Erfindung liegt die Aufgabe zugrunde, ein oben beschriebenes Fahrzeug mit einer Umfeldüberwachungseinrichtung derart fortzubilden, dass mit möglichst geringem Aufwand ein besseres Überwachungsergebnis erzielbar ist. Gleichzeitig soll ein Verfahren zum Betreiben einer Umfeldüberwachungseinrichtung angegeben werden, welches diese Anforderungen erfüllt.

Diese Aufgabe wird erfindungsgemäß durch die Merkmale von Anspruch 1 und Anspruch 8 gelöst.

### Offenbarung der Erfindung

Die Erfindung basiert auf dem Gedanken, die erste Kameraeinrichtung weiterhin derart anzuordnen, dass der Bilderfassungsbereich der ersten Kamera wenigstens einen Teil des Umfelds der ersten Fahrzeugseitenfläche und wenigstens einen Teil des Umfelds der Fahrzeugfrontfläche oder wenigstens einen Teil des Umfelds der Fahrzeugheckfläche und der Bilderfassungsbereich der zweiten Kamera wenigstens einen Teil des Umfelds der zweiten Fahrzeugseitenfläche und wenigstens einen Teil des Umfelds der Fahrzeugfrontfläche oder wenigstens einen Teil des Umfelds der Fahrzeugheckfläche beinhaltet.

Unter der Fahrzeugfrontfläche soll dabei die in Fahrtrichtung vorderste Fläche des Fahrzeugs verstanden werden. Dies ist bei einem PKW mit "Frontschnauze" typischerweise das Frontblech mit Frontgrill und bei einem schweren Nutzfahrzeug mit "schnauzenlosem" Fahrerhaus die die Windschutzscheibe aufnehmende Frontfläche des Fahrerhauses. In analoger Weise soll unter der Fahrzeugheckfläche die in Fahrtrichtung hinterste Fläche des Fahrzeugs verstanden werden. Dies ist bei einem PKW im typischen "three-box-design" das Heckblech im Bereich des Kofferraums und bei einem schweren Nutzfahrzeug beispielsweise eine Heckverkleidung des Aufbaus. Bei Zugfahrzeug-Anhänger-Kombinationen, welche zusammen ebenfalls ein Fahrzeug bilden, wird dann die Fahrzeugheckfläche durch eine Heckverkleidung des Anhänger- oder Aufliegeraufbaus gebildet.

Unter Kanten des Fahrzeugs sollen im Wesentlichen vertikale und kantenartige Stoßlinien wie auch abgerundete Stößlinien verstanden werden, an denen die genannten Fahrzeugflächen an- oder aufeinanderstoßen. Diese Kanten bilden demzufolge Linien bzw. linienhafte Strukturen an der der Außenhaut bzw. der Karosserie des Fahrzeugs aus, an welchen die Fahrzeugfrontfläche bzw. die Fahrzeugheckfläche in die beiden Fahrzeugseitenflächen unter Richtungsänderung übergehen.

Mittels einer solchen Anordnung von lediglich zwei Kameras können sowohl das Umfeld der beiden Seitenflächen des Fahrzeugs als auch das Umfeld der Fahrzeugfrontfläche oder das Umfeld der Fahrzeugheckfläche überwacht werden. Dies resultiert in einem relativ großen Bereich der Umfeldüberwachung des Fahrzeugs mit lediglich zwei Kameras.

Weiterhin wirken dann die erste Kamera und die zweite Kamera, welche dann horizontal zueinander beabstandet angeordnet sind, in Bezug auf das Umfeld der Fahrzeugfrontfläche oder der Fahrzeugheckfläche als Stereokamera zusammen, weil sich dann der Bilderfassungsbereich der ersten Kamera mit dem Bilderfassungsbereich der zweiten Kamera in dem Umfeld der Fahrzeugfrontfläche oder in dem Umfeld der Fahrzeugheckfläche wenigstens teilweise überschneiden. Damit ist es mittels Bilddatenfusion möglich, ein räumliches Bild eines in dem überwachten Umfeld befindlichen Objekts zu generieren bzw. die Entfernung des Objekts zum Fahrzeug zu bestimmen. Ein solches räumliches Bild wird dann bevorzugt in einer Bildauswerteeinrichtung generiert und mittels der Bilddarstellungseinrichtung dargestellt.

Eine Objekterkennung mittels Stereoaufnahme durch wenigstens zwei Kameras erfordert in der Regel einen geringeren Rechenaufwand in den beiden besonders kollisionskritischen Bereichen der Fahrzeugfrontfläche und der Fahrzeugheckfläche als wenn die Objekterkennung mit nur einer Kamera erfolgt. Bevorzugt erfolgt die stereokamerabasierte Objekterkennung mit Objekterkennungsalgorithmen kombiniert, wobei jeder einzelnen Kamera ein solcher Objekterkennungsalgorithmus in der Bildauswerteeinrichtung zugeordnet ist. Hierdurch wird die Robustheit der Umfeldüberwachungseinrichtung gesteigert, weil bei einem Ausfall von einer Kamera bzw. von deren Objekterkennungsalgorithmus Redundanz in Form der anderen Kamera bzw. von deren Objekterkennungsalgorithmus vorhanden ist.

Darüber hinaus ist eine solche Anordnung bei schwierigen Lichtverhältnissen von Vorteil, bei denen beispielsweise das von einer Kamera gelieferte Bild eine schlechte Qualität hat, welche von der unter Umständen besseren Qualität des von der anderen Kamera gelieferten Bildes kompensiert werden kann.

Außerdem können dann Blending-Masken' wie sie zum Zusammensetzen ("stitching") von einzelnen aufgenommenen Bildern verwendet werden, basierend auf der ermittelten Entfernung bzw. dem ermittelten Standort des Objekts dynamisch verändert werden, um jeweils eine optimale Ansicht von einem Objekt zu erhalten.

Wie oben ausgeführt ist eine erste Kameraeinrichtung mit einer ersten Kamera und einer zweiten Kamera vorgesehen, welche die Umgebung der beiden Seitenfläche und je nach Platzierung an den Fahrzeugkanten vorne oder hinten zusätzlich die Umgebung der Fahrzeugfrontfläche oder alternativ die Umgebung der Fahrzeugheckfläche überwachen.

Um eine in vielerlei Hinsicht vorteilhafte Gesamtüberwachung der Umgebung des Fahrzeugs zu erzielen, wird eine zweite Kameraanordnung der Bilderfassungseinrichtung vorgeschlagen, bei welcher eine dritte Kamera an einer dritten, von der ersten und zweiten Kante abweichenden Kante des Fahrzeugs angeordnet ist, an welcher die erste Fahrzeugseitenfläche und die Fahrzeugfrontfläche oder eine Fahrzeugheckfläche aufeinanderstoßen, und bei welcher eine vierte Kamera an einer von der ersten, zweiten und dritten Kante abweichenden vierten Kante des Fahrzeugs angeordnet ist, an welcher die zweite Fahrzeugseitenfläche und die Fahrzeugfrontfläche oder die Fahrzeugheckfläche aufeinanderstoßen, derart, dass der Bilderfassungsbereich der dritten Kamera wenigstens einen Teil des Umfelds der ersten Fahrzeugseitenfläche und wenigstens einen Teil des Umfelds der Fahrzeugfrontfläche beinhaltet, falls der wenigstens eine Teil des Umfelds der Fahrzeugfrontfläche nicht vom Bilderfassungsbereich der ersten Kamera beinhaltet ist, oder wenigstens einen Teil des Umfelds der Fahrzeugheckfläche beinhaltet, falls der wenigstens eine Teil des Umfelds der Fahrzeugheckfläche nicht vom Bilderfassungsbereich der ersten Kamera beinhaltet ist, und der Bilderfassungsbereich der vierten Kamera wenigstens einen Teil des Umfelds der zweiten Fahrzeugseitenfläche und wenigstens einen Teil des Umfelds der Fahrzeugfrontfläche beinhaltet, falls der wenigstens eine Teil des Umfelds der Fahrzeugfrontfläche nicht vom Bilderfassungsbereich der zweiten Kamera beinhaltet ist, oder wenigstens einen Teil des Umfelds der Fahrzeugheckfläche beinhaltet, falls der wenigstens eine Teil des Umfelds der Fahrzeugheckfläche nicht vom Bilderfassungsbereich der zweiten Kamera beinhaltet ist.

Mit anderen Worten wird dann an allen vier Fahrzeugkanten jeweils eine Kamera vorgesehen, deren Bilderfassungsbereiche jeweils wenigstens einen Teil der Umgebung einer Fahrzeugseitenfläche sowie wenigstens einen Teil der der Umgebung der Fahrzeugfrontfläche oder der Fahrzeugheckfläche beinhaltet. Damit ist eine Rundumüberwachung der Fahrzeugumgebung mit lediglich vier Kameras möglich.

Weiterhin sind die erste Kamera und die zweite Kamera und die dritte Kamera und die vierte Kamera jeweils im Bereich eines höchsten Punktes an der jeweils zugeordneten Kante angeordnet. Mit anderen Worten sind diese Kameras dann an den in vertikaler Richtung gesehen "oberen Ecken" des Fahrzeugs angeordnet.

Dann sind insbesondere Aufnahmen in Vogelperspektive, also in der Vertikalen von oben gesehen möglich. Alternativ sind aber auch Panoramaperspektiven möglich.

Dies wird dadurch realisiert, dass der erste Bilderfassungsbereich und der zweite Bilderfassungsbereich und der dritte Bilderfassungsbereich und der vierte Bilderfassungsbereich jeweils eine Mittelachse aufweisen, welche eine vertikale Komponente hat. Da die Bilderfassungsbereiche von Kameras ausgehend von der Linse sich meist trichter- oder kegelförmig erweitern, wird unter einer solchen Mittelachse eines Bilderfassungsbereichs die Mittelachse des entsprechenden Trichters bzw. Kegels verstanden. Mit andern Worten weisen die Mittelachsen der Bilderfassungsbereiche dann nach unten.

Die Bilder von nach unten gerichteten Kameras benötigen weniger Transformationsaufwand zum Generieren einer Vogelperspektive, weil sie bereits nach unten gerichtet sind und somit weniger Perspektivenanpassung notwendig ist.

Weiterhin ist eine Bildauswerteeinrichtung der Umfeldüberwachungseinrichtung vorgesehen, in welche die von den Kameras aufgenommenen Bilder eingesteuert werden, welche ausgebildet ist, dass
a) die von der ersten Kameraeinrichtung und/oder von der zweiten Kameraeinrichtung aufgenommenen und in die Bildauswerteeinrichtung eingesteuerten Bilder mittels einer homographischen Transformation in die Bodenebene projiziert werden,
b) basierend auf den in die Bodenebene projizierten Bildern wenigstens ein eventuell im Umfeld des Fahrzeugs befindliches Objekt mittels integrierter Objekterkennungsalgorithmen erkannt und dessen Position in Bezug zum Fahrzeug bestimmt wird,
c) die in die Bodenebene projizierten Bilder in einer einzigen Darstellung zusammengefasst werden und diese Darstellung als Vogelperspektive generiert werden,
d) die Vogelperspektive in die Bilddarstellungseinrichtung zur dortigen Darstellung eingesteuert wird.

Diese Maßnahmen in Kombination mit der erfindungsgemäßen Anordnung der Kameras ermöglichen insbesondere beim "Image Stitching", also beim Zusammensetzen von Bildern aus mehreren Einzelbildern zu einer Darstellung, dass die Lage der Stitching-Achsen einerseits durch Rotation und andererseits durch Translation dynamisch verändert werden kann, um eine bessere Darstellung des erkannten Objekts zu gewährleisten. Genaueres hierzu geht aus der nachfolgenden Beschreibung eines Ausführungsbeispiels hervor.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist auch eine mit der Bildauswerteeinrichtung derart zusammen wirkende Warneinrichtung vorgesehen, dass bei Unterschreiten eines vorgegebenen Mindestabstands zu der betreffenden Fahrzeugfläche oder zum Fahrzeug durch wenigstens ein erkanntes Objekt ein Warnsignal erzeugt wird.

Falls sich bei der oben beschriebenen Umgebungsüberwachung mit wenigstens zwei Kameras bzw. mit vier Kameras insbesondere bei langen Fahrzeugen Überwachungslücken ergeben sollten, so kann zusätzlich an der ersten Fahrzeugseitenfläche und der zweiten Fahrzeugseitenfläche jeweils wenigstens eine weitere Kamera angeordnet werden, mit welcher ein von den Bilderfassungsbereichen der ersten Kamera und der zweiten Kamera und/oder der dritten Kamera und der vierten Kamera nicht erfasster Umfeldbereich des Fahrzeugs erfasst wird.

Die Erfindung betrifft auch ein Verfahren zum Betreiben einer Umfeldüberwachungseinrichtung eines Fahrzeugs, welche wenigstens eine Kameraeinrichtung, eine Bildauswerteeinrichtung sowie eine Bilddarstellungseinrichtung beinhaltet, umfassend wenigstens folgende Schritte:
a) Von der Kameraeinrichtung, welche wenigstens zwei an Fahrzeugkanten des Fahrzeugs angeordnete Kameras umfasst, deren Bilderfassungsbereiche wenigstens einen Teil eines Umfelds einer Fahrzeugfrontfläche oder einer Fahrzeugheckfläche sowie wenigstens einen Teil des Umfelds der beiden Fahrzeugseitenflächen beinhalten, werden Bilder vom Umfeld des Fahrzeugs aufgenommen und diese Bilder repräsentierende Signale in die Bildauswerteeinrichtung eingesteuert,
b) die von der Kameraeinrichtung aufgenommenen und in die Bildauswerteeinrichtung eingesteuerten Bilder werden mittels einer homographischen Transformation in die Bodenebene projiziert,
c) basierend auf den in die Bodenebene projizierten Bildern wird wenigstens ein eventuell im Umfeld des Fahrzeugs befindliches Objekt mittels integrierter Objekterkennungsalgorithmen erkannt und dessen Position in Bezug zum Fahrzeug bestimmt,
d) die in die Bodenebene projizierten Bilder werden in einer einzigen Darstellung zusammengefasst und diese Darstellung als Vogelperspektive generiert,
e) die Vogelperspektive wird in die Bilddarstellungseinrichtung zur dortigen Darstellung eingesteuert.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.1: einen schematische Draufsicht auf ein Fahrzeug mit einer Umfeldüberwachungseinrichtung nach dem Stand der Technik mit je einer Kamera an den beiden Fahrzeugseitenflächen und je einer Kamera an der Fahrzeugfrontfläche und an der Fahrzeugheckfläche;
- Fig.2: eine perspektivische Darstellung des Fahrzeugs mit der Umfeldüberwachungseinrichtung nach dem Stand der Technik gemäß Fig.1, in welcher die Bilderfassungsbereiche der vier Kameras sichtbar sind;
- Fig.3: eine schematische Draufsicht auf das Fahrzeug mit der Umfeldüberwachungseinrichtung nach dem Stand der Technik gemäß Fig.1, in welcher die Bilderfassungsbereiche der vier Kameras sichtbar sind;
- Fig.4: eine schematische Draufsicht auf das Fahrzeug mit der Umfeldüberwachungseinrichtung nach dem Stand der Technik gemäß Fig.1, in welcher mögliche Überlappungen der Bilderfassungsbereiche der vier Kameras zum Erzeugen von Stereobildern sichtbar sind;
- Fig.5: eine schematische Draufsicht auf das Fahrzeug mit der Umfeldüberwachungseinrichtung nach dem Stand der Technik gemäß Fig.1, in welcher eine Vogelperspektive eines mittels einer Frontkamera aufgenommenen Objekts gezeigt ist;
- Fig.6a bis Fig.6d: schematische Draufsichten auf das Fahrzeug mit der Umfeldüberwachungseinrichtung nach dem Stand der Technik gemäß Fig.1, in welchen ein Blending von durch verschiedene Kameras in Vogelperspektive aufgenommenen Bildern gezeigt ist;
- Fig.7: eine stark schematisierte Darstellung einer Umfeldüberwachungseinrichtung eines Fahrzeugs gemäß einer bevorzugten Ausführungsform der Erfindung;
- Fig.8: eine schematische Draufsicht auf ein Fahrzeug mit einer ersten und zweiten Kameraeinrichtung der Umfeldüberwachungseinrichtung von Fig.7 gemäß einer bevorzugten Ausführungsform der Erfindung mit je einer Kamera an jeder Außenkante des Fahrzeugs;
- Fig.9: eine perspektivische Darstellung des Fahrzeugs mit der ersten und zweiten Kameraeinrichtung der Umfeldüberwachungseinrichtung von Fig.7, in welcher die Bilderfassungsbereiche der vier Kameras sichtbar sind;
- Fig.10: eine schematische Draufsicht auf das Fahrzeug mit der ersten und zweiten Kameraeinrichtung der Umfeldüberwachungseinrichtung von Fig.7, in welcher die Bilderfassungsbereiche der vier Kameras sichtbar sind;
- Fig.11: eine schematische Draufsicht auf das Fahrzeug mit der ersten und zweiten Kameraeinrichtung der Umfeldüberwachungseinrichtung von Fig.7, in welcher die Überlappungsbereiche der Bilderfassungsbereiche der vier Kameras sichtbar sind;
- Fig.12: eine schematische Draufsicht auf das Fahrzeug mit der ersten und zweiten Kameraeinrichtung der Umfeldüberwachungseinrichtung von Fig.7, in welcher Vogelperspektiven eines mittels der beiden vorderen Kameras aufgenommenen Objekts gezeigt sind;
- Fig.13a bis 13f: schematische Draufsichten auf das Fahrzeug mit der ersten und zweiten Kameraeinrichtung der Umfeldüberwachungseinrichtung von Fig.7, in welchen ein Blending von durch verschiedene Kameras in Vogelperspektive aufgenommenen Bildern gezeigt ist;
- Fig.14a und 14b: schematische Draufsichten auf das Fahrzeug mit der ersten und zweiten Kameraeinrichtung der Umfeldüberwachungseinrichtung von Fig.7 sowie mit weiteren seitlich angeordneten Kameras;
- Fig.15: eine perspektivische Ansicht eines Zugfahrzeugs einer Zugfahrzeug-Anhänger-Kombination ohne Anhänger bzw. Auflieger, bei welchem an einer Heckfläche der Fahrerkabine eine zusätzliche Kamera zur Überwachung des Heckbereichs angeordnet ist;
- Fig.16: ein Flussdiagramm von Schritten einer bevorzugten Ausführungsform eines Verfahrens, welche durch die Umfeldüberwachungseinrichtung gemäß der Erfindung ausgeführt werden.

### Beschreibung des Stands der Technik

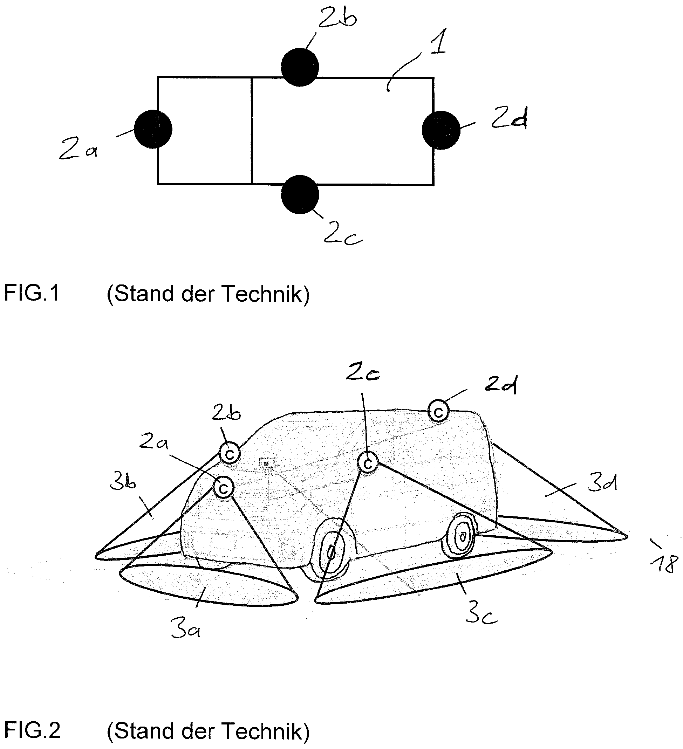

Fig.1 zeigt einen schematische Draufsicht auf ein Nutzfahrzeug 1 mit einer Umfeldüberwachungseinrichtung 100 nach dem Stand der Technik mit einer Kamera 2a an der Fahrzeugfrontfläche, je einer Kamera 2b, 2c an den beiden Fahrzeugseitenflächen 10, 12 und einer Kamera 2d an der Fahrzeugheckfläche 16.

In Fig.2 ist eine perspektivische Darstellung des Nutzfahrzeugs 1 mit der Umfeldüberwachungseinrichtung 100 nach dem Stand der Technik gemäß Fig.1 gezeigt, in welcher Bilderfassungsbereiche 3a bis 3d der vier Kameras 2a bis 2d sichtbar sind. Demnach erstrecken sich die Bilderfassungsbereiche 3a bis 3d jeweils kegelförmig oder trichterförmig ausgehend von der jeweiligen Kamera 2a bis 2d schräg nach unten zur Bodenaufstandsfläche 18 des Nutzfahrzeugs 1 bzw. zur Bodenfläche 18 hin.

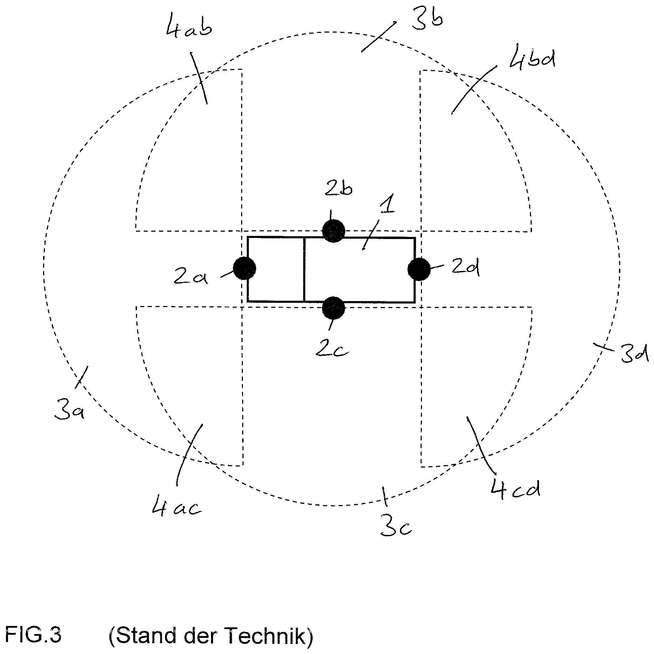

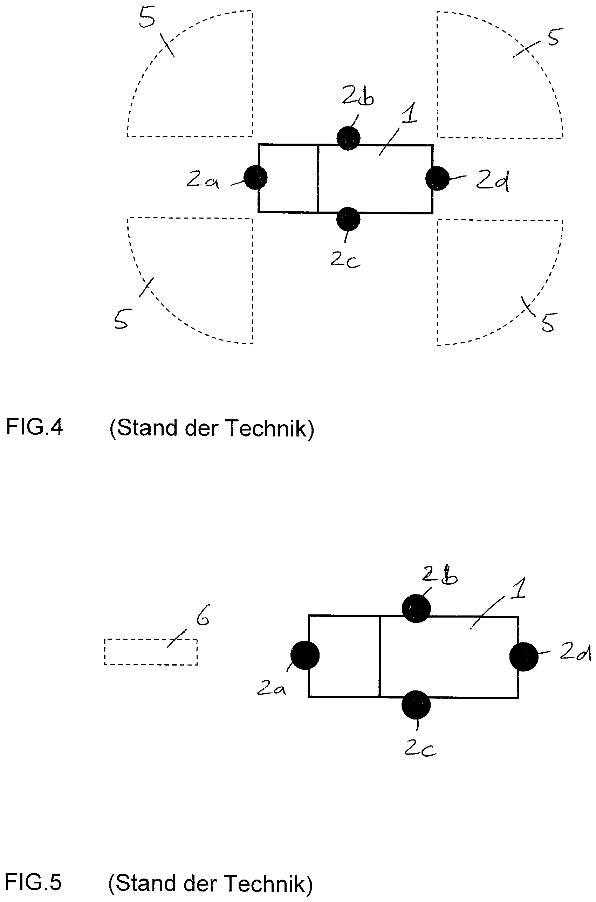

Wie aus Fig.3 hervorgeht, welche die Projektionen der Bilderfassungsbereiche 3a bis 3d3 in der Bodenaufstandsfläche 18 zeigt, können die Bilderfassungsbereiche 3a bis 3d der vier Kameras 2a bis 2d in den Fahrzeugkanten oder Fahrzeugeckbereichen in Überlappungsbereichen 4ab, 4bd, 4cd und 4ac überlappen. Jedoch sind diese Überlappungsbereiche 4ab, 4bd, 4cd und 4ac eben auf die Randbereiche des Nutzfahrzeugs 1 beschränkt, wie auch aus Fig.4 hervorgeht. Lediglich in diesen fahrzeugrandseitigen Überlappungsbereichen 4ab, 4bd, 4cd und 4ac, welche zusammen einen Stereoerfassungsbereich 5 bilden, sind dann Stereobilder, d.h. Bilder, die von wenigstens zwei Kameras 2a bis 2d parallel aufgenommen werden, möglich.

Fig.5 zeigt eine schematische Draufsicht auf das Nutzfahrzeug 1 mit der Umfeldüberwachungseinrichtung 100 nach dem Stand der Technik gemäß Fig.1, in welcher eine Vogelperspektive 6 eines mittels der einzigen Frontkamera 2a aufgenommenen Objekts gezeigt ist, welches sich etwa mittig vor der Fahrzeugfrontfläche 14 des Nutzfahrzeugs 1 und damit nicht im fahrzeugkantenseitigen Stereoerfassungsbereich 5 nach Fig. 4 befindet. Damit ist eine Stereobildaufnahme des Objekts nicht möglich.

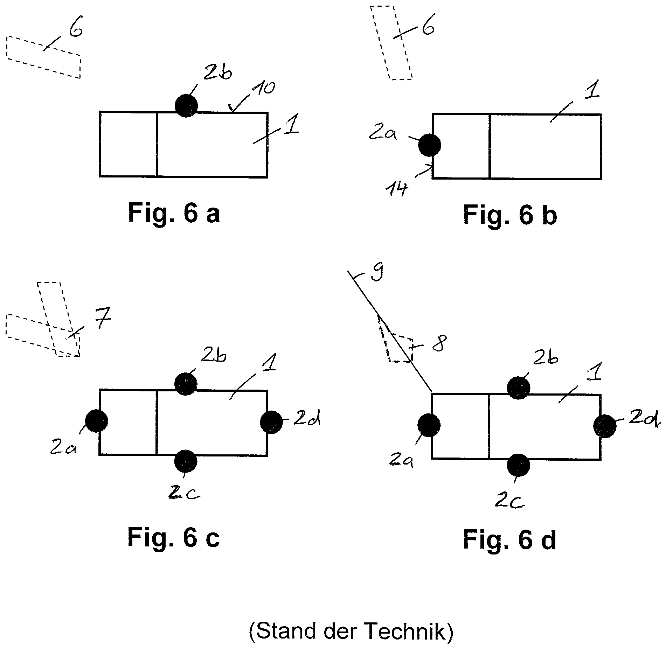

In Fig.6a bis Fig.6d sind schematische Draufsichten auf das Nutzfahrzeug 1 mit der Umfeldüberwachungseinrichtung 100 nach dem Stand der Technik gemäß Fig.1 gezeigt, in welchen ein Blending von durch zwei Kameras 2a und 2b in Vogelperspektive 6 aufgenommenen Bildern eines Objekts gezeigt ist. In diesem Fall befindet sich das Objekt in einem Überlappungsbereich 4ac bzw. in einem Stereoerfassungsbereich 5 der beiden zwei Kameras, nämlich der Kamera 2b an der ersten Fahrzeugseitenfläche 10 (Fig.6a) und einer Kamera 2a an der Fahrzeugfrontfläche 14 (Fig.6b), wobei jeweils das von der jeweiligen Kamera 2a bzw. 2b aufgezeichnete Bild in Vogelperspektive 6 zu sehen ist.

In Fig.6c ist das Stereobild 7 der von den beiden Kameras 2a und 2b aufgenommenen Bilder zu sehen und in Fig.6d eine Vogelperspektive 8 der entlang einer Blending Achse 9 zusammengefügten Bilder (stitching). Wie aus Fig.6d hervorgeht, ist die Vogelperspektive 8 des Objekts 6 unvollständig, da ein Teil beim Blending oder Stitchen verloren geht. Folglich kann das Objekt nur schwer erkannt werden.

Mit dem nachfolgend beschriebenen bevorzugten Ausführungsbeispiel der Erfindung werden die beim oben beschriebenen Stand der Technik vorhandenen Nachteile vermieden.

### Beschreibung eines Ausführungsbeispiels der Erfindung

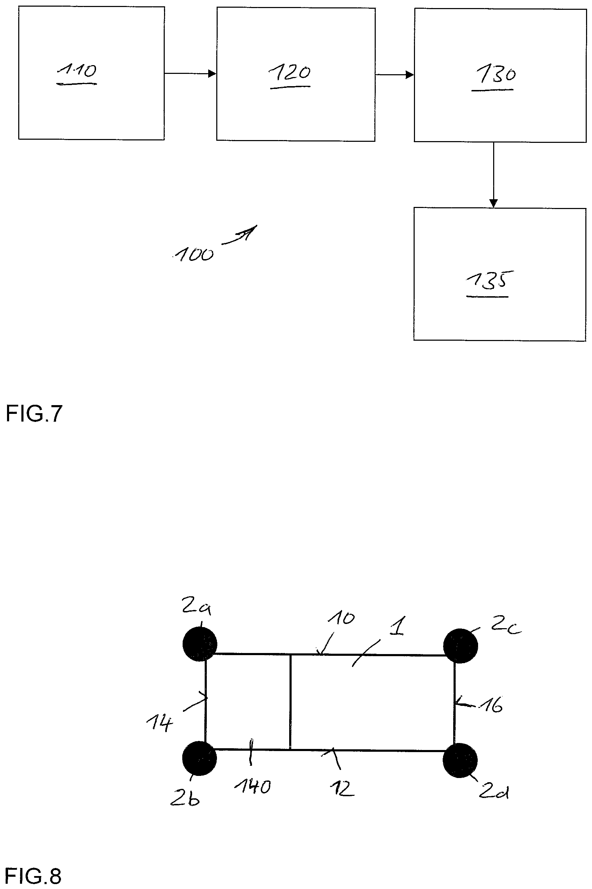

In Fig.7 ist eine stark schematisierte Darstellung einer Umfeldüberwachungseinrichtung 100 gemäß einer bevorzugten Ausführungsform der Erfindung gezeigt, wie sie hier beispielsweise auf einem schweren Nutzfahrzeug 1 angeordnet ist. Die Umgebungsüberwachungseinrichtung weist eine Bilderfassungseinrichtung 110 zum Aufnehmen von Bildern von sich in der Umgebung des Nutzfahrzeugs 1 befindlichen Objekten auf, welche die Bilder von diesen Objekten repräsentierende Bildsignale in eine Bildauswerteeinrichtung 120 einsteuert. Nach dortiger, im Folgenden noch zu beschreibender Auswertung bzw. Bearbeitung der Bildsignale werden entsprechende Bilder von den aufgenommenen Objekten in einer Bilddarstellungseinrichtung 130 wie beispielsweise einem in einem Fahrerhaus 140 des Nutzfahrzeugs 1 angeordneten Monitor gezeigt.

Fig.8 zeigt eine schematische Draufsicht auf das Nutzfahrzeug 1 mit einer ersten und zweiten Kameraeinrichtung der Umfeldüberwachungseinrichtung 100 von Fig.7 gemäß einer bevorzugten Ausführungsform der Erfindung mit je einer Kamera 2a bis 2d an jeder Außenkante des Nutzfahrzeugs 1.

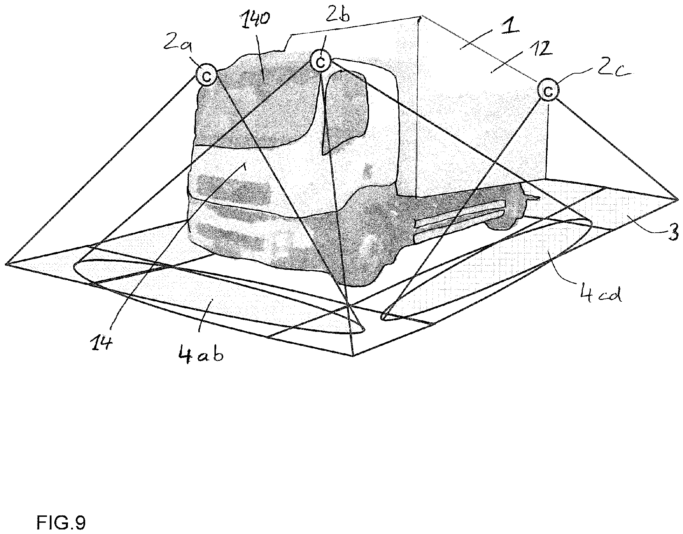

Wie anhand von Fig.8 und Fig.9 leicht vorstellbar ist, ist die in Fig.8 schematisch gezeigte Projektionsfläche des Nutzfahrzeugs in die Bodenfläche annähernd rechteckförmig und weist daher an den Übergangen zwischen einer Fahrzeugfrontfläche 14 und den beiden Fahrzeugseitenflächen 10, 12 sowie zwischen Letzteren und einer Fahrzeugheckfläche 16 Übergangskanten auf.

Unter solchen Übergangs- oder Fahrzeugkanten sollen daher im Wesentlichen vertikale und kantenartige Stoßlinien wie auch abgerundete Stoßlinien verstanden werden, an denen die Fahrzeugfrontfläche 14 an die beiden Fahrzeugseitenflächen 10, 12 und Letztere an die Fahrzeugheckfläche 16 stoßen bzw. übergehen. Die Fahrzeugkanten bilden demzufolge Linien bzw. linienhafte Strukturen an der der Außenhaut bzw. der Karosserie des Nutzfahrzeugs aus, an welchen die Fahrzeugfrontfläche 14 bzw. die Fahrzeugheckfläche 16 in die beiden Fahrzeugseitenflächen 10, 12 unter beispielsweise 90 Grad Richtungsänderung übergehen.

Bei einer ersten Kameraanordnung der Bilderfassungseinrichtung ist gemäß Fig.8 eine erste Kamera 2a im Bereich einer ersten Kante des Nutzfahrzeugs 1 angeordnet, an welcher die erste Fahrzeugseitenfläche 10 und die Fahrzeugfrontfläche 14 aufeinanderstoßen, und bei welcher eine zweite Kamera 2b im Bereich einer von der ersten Kante abweichenden zweiten Kante des Nutzfahrzeugs 1 angeordnet ist, an welcher ein zweite, von der ersten Fahrzeugseitenfläche 10 abweichende Fahrzeugseitenfläche 12 und die Fahrzeugfrontfläche 14 einander stoßen.

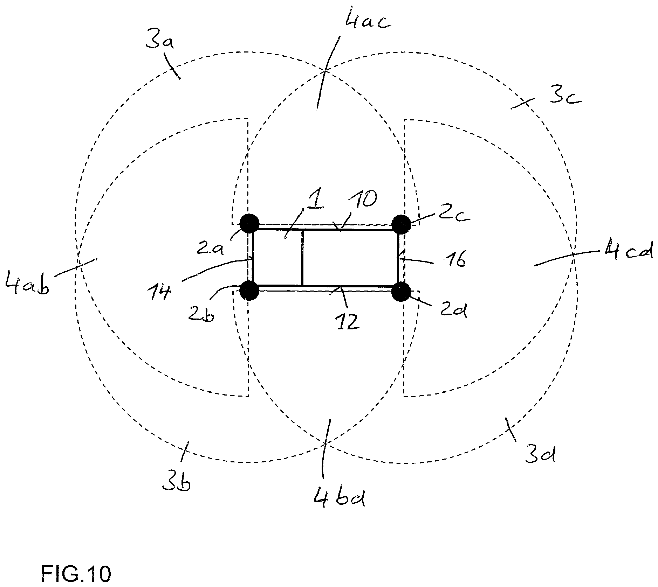

Wie aus Fig.9 und Fig.10 hervorgeht, beinhaltet der Bilderfassungsbereich 3a der ersten Kamera 2a wenigstens einen Teil des Umfelds der ersten Fahrzeugseitenfläche 10 und wenigstens einen Teil des Umfelds der Fahrzeugfrontfläche 14 und der Bilderfassungsbereich 3b der zweiten Kamera 2b wenigstens einen Teil des Umfelds der zweiten Fahrzeugseitenfläche 12 und wenigstens einen Teil des Umfelds der Fahrzeugfrontfläche 14.

Weiterhin beinhaltet die Bilderfassungseinrichtung 110 auch eine zweite Kameraeinrichtung, bei welcher eine dritte Kamera 2c an einer dritten, von der ersten und zweiten Kante abweichenden Kante des Nutzfahrzeugs angeordnet ist, an welcher die erste Fahrzeugseitenfläche 10 und die Fahrzeugheckfläche 16 aufeinanderstoßen, und bei welcher eine vierte Kamera 2d an einer von der ersten, zweiten und dritten Kante abweichenden vierten Kante des Nutzfahrzeugs 1 angeordnet ist, an welcher die zweite Fahrzeugseitenfläche 12 und die Fahrzeugheckfläche 16 aufeinanderstoßen.

Dabei beinhaltet der Bilderfassungsbereich 3c der dritten Kamera 2c wenigstens einen Teil des Umfelds der ersten Fahrzeugseitenfläche 10 und wenigstens einen Teil des Umfelds der der Fahrzeugheckfläche 16. Der Bilderfassungsbereich 3d der vierten Kamera 2d beinhaltet wenigstens einen Teil des Umfelds der zweiten Fahrzeugseitenfläche 12 und wenigstens einen Teil des Umfelds der Fahrzeugheckfläche 16.

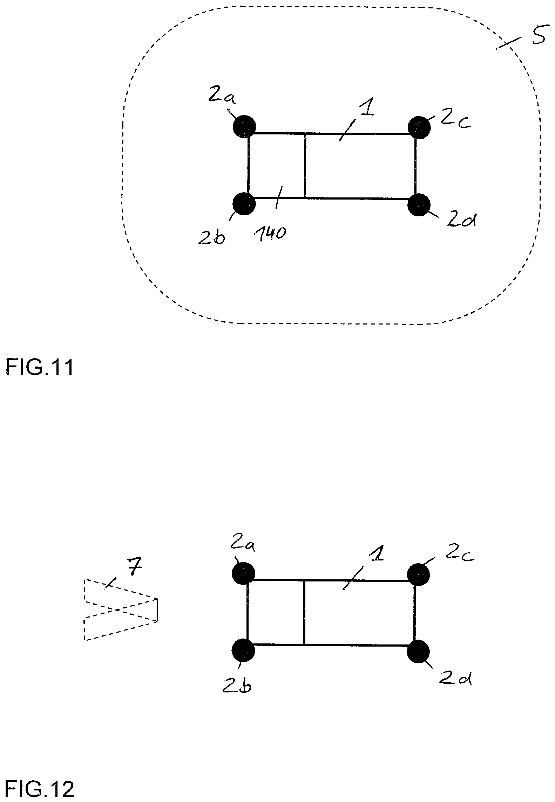

Mit anderen Worten wird dann an allen vier Fahrzeugkanten jeweils eine Kamera 2a bis 2d vorgesehen, deren Bilderfassungsbereiche 3a bis 3d jeweils wenigstens einen Teil der Umgebung einer Fahrzeugseitenfläche 10, 12 sowie wenigstens einen Teil der der Umgebung der Fahrzeugfrontfläche 14 oder der Fahrzeugheckfläche 16 beinhaltet. Damit ist eine Rundumüberwachung der Fahrzeugumgebung mit lediglich vier Kameras möglich, wie aus Fig.10 hervorgeht, in welcher die Überlappungsbereiche 4ab, 4ac, 4bd und 4cd gezeigt sind, in welchen Bilder von wenigstens zwei Kameras aufgenommen werden können. Diese Überlappungsbereiche 4ab, 4ac, 4bd und 4cd bilden zusammen einen Bilderfassungsbereich 5 der vier Kameras 2a bis 2d, in welchem eine Stereoerfassung von Objekten mit jeweils wenigstens zwei Kameras möglich ist und welcher in Fig.11 idealisiert dargestellt ist.

Gemäß alternativen Ausführungsformen kann auch nur eine erste Kameraeinrichtung mit einer ersten Kamera 2a und einer zweiten Kamera 2b an den beiden vorderen Fahrzeugkanten oder nur eine zweite Kameraeinrichtung mit einer dritten Kamera 2c und einer vierten Kamera 2d an den beiden hinteren Fahrzeugkanten vorgesehen sein, wobei dann folglich entweder das Frontumfeld und die beiden Seitenumfelder oder das Heckumfeld und die beiden Seitenumfelder des Nutzfahrzeugs 1 überwacht werden.

Wie insbesondere aus Fig.9 hervorgeht, sind vier Kameras 2a bis 2d bevorzugt jeweils im Bereich eines höchsten Punktes an der jeweils zugeordneten Fahrzeugkante angeordnet. Mit anderen Worten sind diese Kameras 2a bis 2d dann an den in vertikaler Richtung gesehen "oberen Ecken" des Nutzfahrzeugs 1 angeordnet. Dann sind insbesondere Aufnahmen in Vogelperspektive, also in der Vertikalen von oben gesehen möglich.

Wenn man davon ausgeht, dass die trichter- oder kegelförmigen Bilderfassungsbereiche 3a bis 3d jeweils eine gedachte Mittelachse aufweisen, so haben diese Mittelachsen dann als Vektor gesehen jeweils eine vertikale Komponente. Mit andern Worten weisen die Mittelachsen der Bilderfassungsbereiche 3a bis 3d der vier Kameras 2a bis 2d dann nach unten.

Fig.12 zeigt eine Stereoaufnahme eines mittels der beiden vorderen Kameras 2a und 2b aufgenommenen Objekts als Vogelperspektive 7, welches sich vor der Fahrzeugfrontfläche 14 des Nutzfahrzeugs 1 befindet. Die Vogelperspektive 7 setzt sich daher aus zwei Darstellungen eines Objekts aus unterschiedlichen Blickwinkeln oder- Blickrichtungen zusammen.

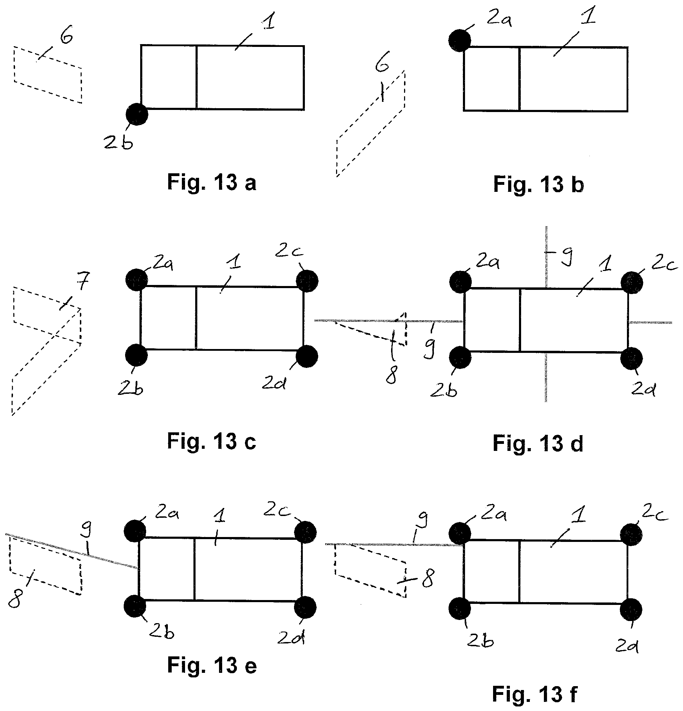

In den Fig.13a bis 13f ist die Vorgehensweise der Bildauswertung an dem Beispiel von Fig.12 schrittweise gezeigt.

Fig.13a zeigt eine Darstellung des Objekts 6 wie sie von der vorderen linken Kamera 2b und Fig.13b eine Darstellung des Objekts 6 wie sie von der vorderen rechten Kamera 2a geliefert wird.

In Fig.13c ist die Überlappung bzw. das Stereobild aus den Darstellungen der beiden Kameras 2a und 2b als Vogelperspektive 7 gezeigt.

Fig.13d zeigt in Vogelperspektive eine einzige Darstellung 8, welche durch Zusammenfassen (Blending oder Stitching) der Einzelbilder der beiden Kameras 2a und 2b von dem Objekt 6 hervorgegangen ist, wobei der sichtbare Teil in dicker gestrichelter Linie und der unsichtbare Teil in dünner gestrichelter Linie gezeigt ist. Die Blending Achse 9 befindet sich dabei mittig zwischen den beiden Kameras 2a und 2b und senkrecht zur Fahrzeugfrontfläche 14.

Um eine verbesserte einzelne Darstellung 8 von dem Objekt 6 in der Vogelperspektive zu erhalten, wurde die Blending Achse 9 gemäß Fig.13e zuerst dynamisch gedreht und dann gemäß Fig.13f durch dynamische Translation hier beispielsweise nach rechts verschoben.

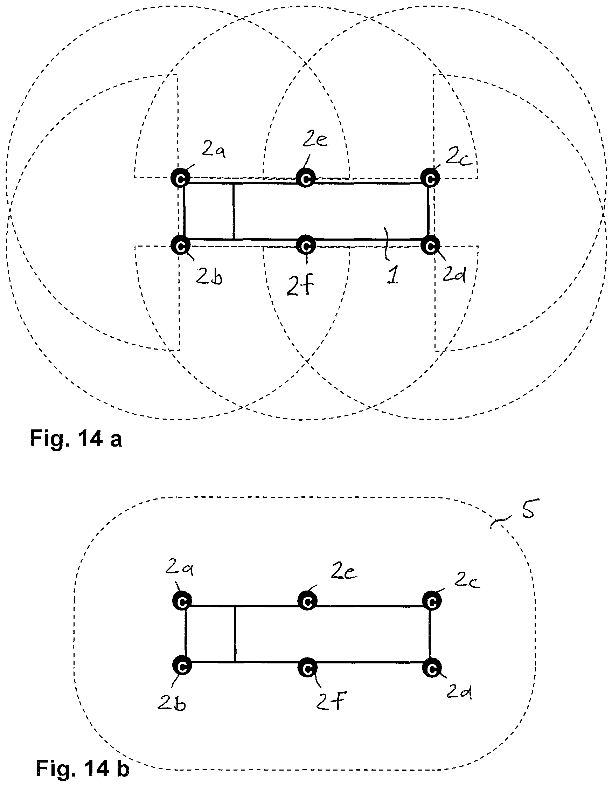

Falls sich bei der oben beschriebenen Umgebungsüberwachung mit vier Kameras 2a bis 2d insbesondere bei langen Fahrzeugen Überwachungslücken ergeben sollten, so kann nach der in Fig.14a und Fig.14b gezeigten Ausführungsform zusätzlich an der ersten Fahrzeugseitenfläche 10 und der zweiten Fahrzeugseitenfläche 12 jeweils eine weitere Kamera 2e bzw. 2f angeordnet werden, mit welcher ein von den Bilderfassungsbereichen der ursprünglich vier Kameras 2a bis 2d nicht erfassbarer Umfeldbereich des Nutzfahrzeugs 1 erfasst wird. Diese Ausführungsform betrifft besonders lange Fahrzeuge bzw. Fahrzeugverbände wie Zugfahrzeug-Anhänger-Kombinationen bzw. Zugfahrzeug-Auflieger-Kombinationen. In Fig.14a sind die Bilderfassungsbereiche 3 der dann beispielsweise sechs Kameras 2a bis 2f gezeigt und in Fig.14b idealisiert der Stereoerfassungsbereich 5 dieser sechs Kameras 2a bis 2f.

Zusätzlich zu den vier an den Fahrzeugkanten angeordneten vier Kameras 2a bis 2d kann eine beliebige Anzahl weiterer Kameras an allen Flächen des Nutzfahrzeugs und insbesondere an den Fahrzeugseitenflächen 10, 12, an der Fahrzeugfrontfläche 14 und an der Fahrzeugheckfläche 16 angeordnet werden.

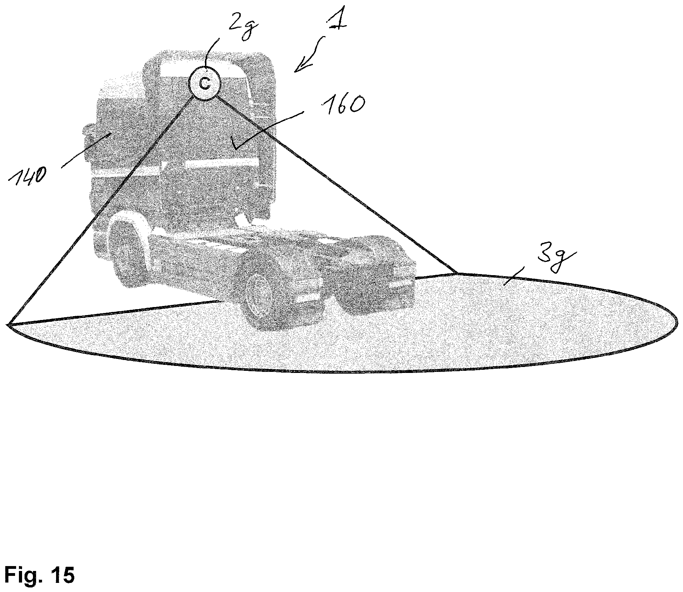

In Fig.15 ist beispielsweise eine Ausführungsform mit einer zusätzlichen Kamera 2g an einer rückwärtigen Wand des Fahrerhauses 140 des Zugfahrzeugs 1 ohne angekuppelten Auflieger gezeigt, deren Bilderfassungsbereich 3g hier beispielsweise die Umgebung hinter dem Fahrerhaus 140 erfasst.

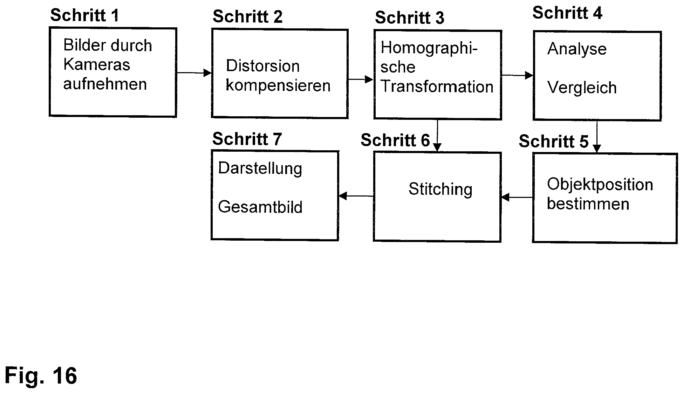

Fig.16 zeigt ein Flussdiagramm von Schritten einer bevorzugten Ausführungsform eines Verfahrens, welche durch die oben beschriebene Umfeldüberwachungseinrichtung 100 ausgeführt werden.

Gemäß Schritt 1 von Fig.16 werden mittels wenigstens einer Kameraeinrichtung mit beispielsweise Fischaugenlinsen (fish eye lens) Bilder vom Umfeld des Fahrzeugs aufgenommen. Die Kameraeinrichtung umfasst dabei wenigstens zwei an Fahrzeugkanten des Fahrzeugs angeordnete Kameras, deren Bilderfassungsbereiche wenigstens einen Teil eines Umfelds einer Fahrzeugfrontfläche oder einer Fahrzeugheckfläche sowie wenigstens einen Teil des Umfelds der beiden Fahrzeugseitenflächen beinhalten. Die aufgenommenen Bilder repräsentierende Signale werden dann in eine Bildauswerteeinrichtung eingesteuert.

In Schritt 2 wird in der Bildauswerteeinrichtung beispielsweise die Distorsion der Fischaugenlinsen kompensiert.

In Schritt 3 werden die hinsichtlich Distorsion kompensierten Bilder einer homographischen Transformation unterzogen, um die Bilder in eine Bodenaufstandsfläche des Fahrzeugs bzw. die Bodenfläche zu transformieren.

Sodann (Schritt 4) werden die in die Bodenfläche transformierten Bilder in der Bildauswerteeinrichtung analysiert, insbesondere miteinander verglichen. Die Auswertung bzw. Analyse der Bilder erfolgt beispielsweise danach, ob sich die in die Bodenfläche 18 projizierten Bilder unterscheiden, und falls ja, dass sich dann wenigstens eine dreidimensionales Objekt mit einer die Bodenfläche 18 überragenden Höhe innerhalb der Bilderfassungsbereiche 3a bis 3d der Kameras 2a bis 2d befindet. Denn in diesem Fall erscheint ein Objekt aus unterschiedlichen Aufnahmewinkeln wie sie durch mehrere Kameras 2a bis 2d geliefert werden auch in unterschiedlichen Darstellungen, wie schon Fig.13c oben veranschaulichte. Falls nein, so wird davon ausgegangen, dass sich kein dreidimensionales Objekt in den Bilderfassungsbereichen 3a bis 3d der Kameras 2a bis 2d befindet.

In Schritt 5 wird dann die Position des erkannten Objekts oder der erkannten Objekte im Umfeld des Fahrzeugs aus den aufgenommenen und in die Bodenfläche projizierten Stereobildern sowie aus den unterschiedlichen Darstellungen (Blickwinkel) durch die verschiedenen Kameras bestimmt.

In Schritt 6 werden dann die in die Bodenfläche projizierten Bilder in einer einzigen zusammengefügt (stitching bzw. blending), um eine Vogelperspektive der gesamten Umgebung des Fahrzeugs zu erhalten. Gleichzeitig kann abhängig von der ermittelten Position des Objekts oder von den ermittelten Positionen der erkannten Objekte erforderlichenfalls auch ein Warnsignal erzeugt werden.

Die Ausführung der Schritte 2 bis 6, welche die Auswertung der in Schritt 1 aufgenommenen Bilder betreffen, erfolgt in der Bildauswerteeinrichtung 120 (siehe Fig.7).

Schließlich wird in einem Schritt 7 die zu einer einzigen Darstellung zusammen gesetzten Einzelbilder (Stitching bzw. Blending) mittels der Bilddarstellungseinrichtung 130 beispielsweise auf einem Monitor im Fahrerhaus 140 dargestellt. Dabei kann zusätzlich auch das Warnsignal optisch und/oder akustisch wiedergegeben werden.

Das Verfahren nach Fig.16 zusammenfassend beinhaltet dieses daher wenigstens die folgenden Schritte:
a) Von wenigstens einer Bilderfassungseinrichtung 110, welche wenigstens zwei an Fahrzeugkanten des Fahrzeugs angeordnete Kameras 2a, 2b bzw. 2c, 2d umfasst, deren Bilderfassungsbereiche 3a, 3b bzw. 3c, 3d wenigstens einen Teil eines Umfelds einer Fahrzeugfrontfläche 14 oder einer Fahrzeugheckfläche 16 sowie wenigstens einen Teil des Umfelds der beiden Fahrzeugseitenflächen 10, 12 beinhalten, werden Bilder vom Umfeld des Fahrzeugs 1 aufgenommen und diese Bilder repräsentierende Signale in eine Bildauswerteeinrichtung 120 eingesteuert.
b) Die von der Bilderfassungseinrichtung 110 aufgenommenen und in die Bildauswerteeinrichtung 120 eingesteuerten Bilder werden mittels einer homographischen Transformation in die Bodenebene 18 projiziert.
c) Basierend auf den in die Bodenebene 18 projizierten Bildern wird wenigstens ein im Umfeld des Fahrzeugs befindliches Objekt 6 mittels integrierter Objekterkennungsalgorithmen erkannt und dessen Position in Bezug zum Fahrzeug 1 bestimmt.
d) Die in die Bodenebene 18 projizierten Bilder werden in einer einzigen Darstellung 8 zusammengefasst ("gestitcht") und diese Darstellung 8 als Vogelperspektive generiert.
e) Die Vogelperspektive 8 wird in die Bilddarstellungseinrichtung 130 zur dortigen Darstellung eingesteuert.
f) Abhängig von der ermittelten Position eines erkannten Objekts 6 wird ein Warnsignal erzeugt.

Die Warneinrichtung 135 (Fig.7) wirkt dann mit der Bildauswerteeinrichtung 120 derart zusammen, dass bei Unterschreiten eines vorgegebenen Mindestabstands zu der betreffenden Fahrzeugfläche 10 bis 16 oder zum Fahrzeug 1 durch wenigstens ein erkanntes Objekt 6 das Warnsignal erzeugt wird.

Der obige Schritt f) sowie die Warneinrichtung 135 sind lediglich optional und beispielsweise im Rahmen eines Fahrerassistenzsystems vorgesehen. Es kann demgegenüber ausreichend sein, wenn der Fahrer anhand der auf der Bilddarstellungseinrichtung 130 gezeigten (Rundum-)Darstellung 8 beurteilen kann, ob eine Kollisionsgefahr vorliegt oder nicht.

### Bezugszeichenliste

- 1: Fahrzeug
- 2: Kamera
- 3: Bilderfassungsbereich
- 4: Überlappungsbereich
- 5: Stereoerfassungsbereich
- 6: Vogelperspektive einer einzigen Kamera
- 7: Stereobild von wenigstens zwei Kameras
- 8: Darstellung zusammengesetzter Bilder
- 9: Blending Achse
- 10: erste Fahrzeugseitenfläche
- 12: zweite Fahrzeugseitenfläche
- 14: Fahrzeugfrontfläche
- 16: Fahrzeugheckfläche
- 100: Umfeldüberwachungseinrichtung
- 110: Bilderfassungseinrichtung
- 120: Bildauswerteeinrichtung
- 130: Bilddarstellungseinrichtung
- 135: Warneinrichtung
- 140: Fahrerhaus

## Patentansprüche

1. Fahrzeug (1) mit einer die Umgebung des Fahrzeugs überwachenden Umfeldüberwachungseinrichtung (100) beinhaltend
a) eine Bilderfassungseinrichtung (110) mit zumindest zwei Kameras (2a, 2b, 2c, 2d), welche Bilder von der Umgebung des Fahrzeugs (1) und/oder vom Fahrzeug (1) selbst aufnimmt und
b) eine erste Kameraanordnung der Bilderfassungseinrichtung (110), bei welcher eine erste Kamera (2a) im Bereich einer ersten Kante des Fahrzeugs (1) angeordnet ist, an welcher eine erste Fahrzeugseitenfläche (10) und eine Fahrzeugfrontfläche (14) oder eine Fahrzeugheckfläche (16) aufeinanderstoßen, und bei welcher eine zweite Kamera (2b) im Bereich einer von der ersten Kante abweichenden zweiten Kante des Fahrzeugs (1) angeordnet ist, an welcher ein zweite, von der ersten Fahrzeugseitenfläche (10) abweichende Fahrzeugseitenfläche (12) und die Fahrzeugfrontfläche (14) oder die Fahrzeugheckfläche (16) aufeinanderstoßen, wobei
c) die erste Kameraeinrichtung weiterhin derart angeordnet ist, dass der Bilderfassungsbereich (3a) der ersten Kamera (2a) wenigstens einen Teil des Umfelds der ersten Fahrzeugseitenfläche (10) und wenigstens einen Teil des Umfelds der Fahrzeugfrontfläche (14) oder wenigstens einen Teil des Umfelds der Fahrzeugheckfläche (16) und der Bilderfassungsbereich (3b) der zweiten Kamera (3b) wenigstens einen Teil des Umfelds der zweiten Fahrzeugseitenfläche (12) und wenigstens einen Teil des Umfelds der Fahrzeugfrontfläche (14) oder wenigstens einen Teil des Umfelds der Fahrzeugheckfläche (16) beinhaltet, **gekennzeichnet durch**
d) eine zweite Kameraanordnung der Bilderfassungseinrichtung (110), bei welcher eine dritte Kamera (2c) an einer dritten, von der ersten und zweiten Kante abweichenden Kante des Fahrzeugs (1) angeordnet ist, an welcher die erste Fahrzeugseitenfläche (10) und die Fahrzeugfrontfläche (14) oder die Fahrzeugheckfläche (16) aufeinanderstoßen, und bei welcher eine vierte Kamera (2d) an einer von der ersten, zweiten und dritten Kante abweichenden vierten Kante des Fahrzeugs (1) angeordnet ist, an welcher die zweite Fahrzeugseitenfläche (12) und die Fahrzeugfrontfläche (14) oder die Fahrzeugheckfläche (16) aufeinanderstoßen, derart, dass
e) der Bilderfassungsbereich (3c) der dritten Kamera (2c) wenigstens einen Teil des Umfelds der ersten Fahrzeugseitenfläche (10) und wenigstens einen Teil des Umfelds der Fahrzeugfrontfläche (14) beinhaltet, falls der wenigstens eine Teil des Umfelds der Fahrzeugfrontfläche (14) nicht vom Bilderfassungsbereich (2a) der ersten Kamera (2a) beinhaltet ist, oder wenigstens einen Teil des Umfelds der Fahrzeugheckfläche (16) beinhaltet, falls der wenigstens eine Teil des Umfelds der Fahrzeugheckfläche (16) nicht vom Bilderfassungsbereich (3a) der ersten Kamera (2a) beinhaltet ist, und
f) der Bilderfassungsbereich (3d) der vierten Kamera (2d) wenigstens einen Teil des Umfelds der zweiten Fahrzeugseitenfläche (12) und wenigstens einen Teil des Umfelds der Fahrzeugfrontfläche (14) beinhaltet, falls der wenigstens eine Teil des Umfelds der Fahrzeugfrontfläche (14) nicht vom Bilderfassungsbereich (3b) der zweiten Kamera (2b) beinhaltet ist, oder wenigstens einen Teil des Umfelds der Fahrzeugheckfläche (16) beinhaltet, falls der wenigstens eine Teil des Umfelds der Fahrzeugheckfläche (16) nicht vom Bilderfassungsbereich (3b) der zweiten Kamera (2b) beinhaltet ist, und wobei
g) die erste Kamera (2a) und die zweite Kamera (2b) und die dritte Kamera (2c) und die vierte Kamera (2d) jeweils im Bereich eines höchsten Punktes an der jeweils zugeordneten Kante angeordnet sind, und wobei der erste Bilderfassungsbereich (3a) und der zweite Bilderfassungsbereich (3b) und der dritte Bilderfassungsbereich (3c) und der vierte Bilderfassungsbereich (3d) jeweils eine Mittelachse aufweisen, welche eine vertikale Komponente aufweist, und wobei
h) eine Bildauswerteeinrichtung (120) vorgesehen ist, welche ausgebildet ist, dass
h1) die von der ersten Kameraeinrichtung und/oder von der zweiten Kameraeinrichtung aufgenommenen und in die Bildauswerteeinrichtung (120) eingesteuerten Bilder werden mittels einer homographischen Transformation in die Bodenebene (18) projiziert,
h2) basierend auf den in die Bodenebene (18) projizierten Bildern wenigstens ein eventuell im Umfeld des Fahrzeugs (1) befindliches Objekt (6) mittels integrierter Objekterkennungsalgorithmen erkannt und dessen Position in Bezug zum Fahrzeug (1) bestimmt wird,
h3) die in die Bodenebene (18) projizierten Bilder in einer einzigen Darstellung zusammengefasst werden und diese Darstellung als Vogelperspektive (8) generiert wird,
h4) die Vogelperspektive (8) in eine Bilddarstellungseinrichtung (130) zur dortigen Darstellung eingesteuert wird.

2. Fahrzeug nach Anspruch 1, **gekennzeichnet durch** eine mit der Bildauswerteeinrichtung (120) derart zusammenwirkende Warneinrichtung (135), dass bei Unterschreiten eines vorgegebenen Mindestabstands zu der betreffenden Fahrzeugfläche (10, 12, 14, 16) bzw. zum Fahrzeug (1) durch wenigstens ein erkanntes Objekt (6) ein Warnsignal erzeugt wird.

3. Fahrzeug nach einem der vorhergehenden Ansprüche, **dadurch gekennzeichnet, dass** die Fahrzeugfrontfläche (14) die vorderste Fläche des Fahrzeugs (1) und die Fahrzeugheckfläche (16) die hinterste Fläche des Fahrzeugs (1) bildet.

4. Fahrzeug nach einem der vorhergehenden Ansprüche, **dadurch gekennzeichnet, dass** es ein Nutzfahrzeug ist und die Fahrzeugfrontfläche (14) eine Frontfläche eines Fahrerhauses (140) des Nutzfahrzeugs (1) beinhaltet.

5. Fahrzeug nach einem der vorhergehenden Ansprüche, **dadurch gekennzeichnet, dass** es ein Einzelfahrzeug oder ein Fahrzeugverband ist.

6. Fahrzeug nach einem der vorhergehenden Ansprüche, **dadurch gekennzeichnet, dass** zusätzlich an der ersten Fahrzeugseitenfläche (10) und der zweiten Fahrzeugseitenfläche (12) jeweils wenigstens eine weitere Kamera (2e, 2f) angeordnet ist, mit welcher ein von den Bilderfassungsbereichen (3a bis 3d) der ersten Kamera (2a) und der zweiten Kamera (2b) und/oder der dritten Kamera (2c) und der vierten Kamera (2d) nicht erfasster Umfeldbereich des Fahrzeugs (1) erfasst wird.

7. Verfahren zum Betreiben einer Umfeldüberwachungseinrichtung (100) eines Fahrzeugs (1), welche wenigstens eine Bilderfassungseinrichtung (110), eine Bildauswerteeinrichtung (120) sowie eine Bilddarstellungseinrichtung (130) beinhaltet, umfassend wenigstens folgende Schritte:
a) Von der Bilderfassungseinrichtung (110), welche wenigstens zwei an Fahrzeugkanten des Fahrzeugs (1) angeordnete Kameras (2a, 2b) umfasst, deren Bilderfassungsbereiche (3a, 3b) wenigstens einen Teil eines Umfelds einer Fahrzeugfrontfläche (14) oder einer Fahrzeugheckfläche (16) sowie wenigstens einen Teil des Umfelds der beiden Fahrzeugseitenflächen (10, 12) beinhalten, werden Bilder vom Umfeld des Fahrzeugs (1) aufgenommen und diese Bilder repräsentierende Signale in die Bildauswerteeinrichtung (120) eingesteuert, **gekennzeichnet durch** wenigstens folgende weitere Schritte:
b) Die von der Bilderfassungseinrichtung (110) aufgenommenen und in die Bildauswerteeinrichtung (120) eingesteuerten Bilder werden mittels einer homographischen Transformation in die Bodenebene (18) projiziert,
c) basierend auf den in die Bodenebene (18) projizierten Bildern wird wenigstens ein eventuell im Umfeld des Fahrzeugs (1) befindliches Objekt (6) mittels integrierter Objekterkennungsalgorithmen erkannt und dessen Position in Bezug zum Fahrzeug (1) bestimmt,
d) die in die Bodenebene (18) projizierten Bilder werden in einer einzigen Darstellung zusammengefasst und diese Darstellung als Vogelperspektive (8) generiert,
e) die Vogelperspektive (8) wird in die Bilddarstellungseinrichtung (130) zur dortigen Darstellung eingesteuert.

## Claims

1. Vehicle (1) having a surroundings monitoring device (100), which monitors the surroundings of the vehicle, comprising
a) an image capture device (110) with at least two cameras (2a, 2b, 2c, 2d) which captures images of the surroundings of the vehicle (1) and/or of the vehicle (1) itself, and
b) a first camera arrangement of the image capture device (110), in the case of which a first camera (2a) is arranged in the region of a first edge of the vehicle (1) at which a first vehicle side surface (10) and a vehicle front surface (14) or a vehicle rear surface (16) converge, and in the case of which a second camera (2b) is arranged in the region of a second edge, which differs from the first edge, of the vehicle (1) at which a second vehicle side surface (12), which differs from the first vehicle side surface (10), and the vehicle front surface (14) or the vehicle rear surface (16) converge, wherein
c) the first camera arrangement is furthermore arranged such that the image capture area (3a) of the first camera (2a) encompasses at least a part of the surroundings of the first vehicle side surface (10) and at least a part of the surroundings of the vehicle front surface (14) or at least a part of the surroundings of the vehicle rear surface (16), and the image capture area (3b) of the second camera (3b) encompasses at least a part of the surroundings of the second vehicle side surface (12) and at least a part of the surroundings of the vehicle front surface (14) or at least a part of the surroundings of the vehicle rear surface (16), **characterized by**
d) a second camera arrangement of the image capture device (110), in the case of which a third camera (2c) is arranged at a third edge, which differs from the first and second edges, of the vehicle (1) at which the first vehicle side surface (10) and the vehicle front surface (14) or the vehicle rear surface (16) converge, and in the case of which a fourth camera (2d) is arranged at a fourth edge, which differs from the first, second and third edges, of the vehicle (1) at which the second vehicle side surface (12) and the vehicle front surface (14) or the vehicle rear surface (16) converge, such that
e) the image capture area (3c) of the third camera (2c) encompasses at least a part of the surroundings of the first vehicle side surface (10) and at least a part of the surroundings of the vehicle front surface (14), if the at least one part of the surroundings of the vehicle front surface (14) is not encompassed by the image capture area (2a) of the first camera (2a), or encompasses at least a part of the surroundings of the vehicle rear surface (16), if the at least one part of the surroundings of the vehicle rear surface (16) is not encompassed by the image capture area (3a) of the first camera (2a), and
f) the image capture area (3d) of the fourth camera (2d) encompasses at least a part of the surroundings of the second vehicle side surface (12) and at least a part of the surroundings of the vehicle front surface (14), if the at least one part of the surroundings of the vehicle front surface (14) is not encompassed by the image capture area (3b) of the second camera (2b), or encompasses at least a part of the surroundings of the vehicle rear surface (16), if the at least one part of the surroundings of the vehicle rear surface (16) is not encompassed by the image capture area (3b) of the second camera (2b), and wherein
g) the first camera (2a) and the second camera (2b) and the third camera (2c) and the fourth camera (2d) are arranged in each case in the region of a highest point on the respectively associated edge, and wherein the first image capture area (3a) and the second image capture area (3b) and the third image capture area (3c) and the fourth image capture area (3d) have in each case a central axis which has a vertical component, and wherein
h) an image evaluation device (120) is provided which is designed such that
h1) the images captured by the first camera device and/or by the second camera device and input into the image evaluation device (120) are projected into the ground plane (18) by way of a homographic transformation,
h2) based on the images projected into the ground plane (18), at least one object (6) possibly situated in the surroundings of the vehicle (1) is identified by way of integrated object identification algorithms, and the position of said object relative to the vehicle (1) is determined,
h3) the images projected into the ground plane (18) are amalgamated in a single representation, and said representation is generated as an aerial perspective (8),
h4) the aerial perspective (8) is input into an image display device (130) in order to be displayed there.

2. Vehicle according to Claim 1, **characterized by** a warning device (135) which interacts with the image evaluation device (120) such that a warning signal is generated if at least one identified object (6) undershoots a predefined minimum distance to the respective vehicle surface (10, 12, 14, 16) or to the vehicle (1).

3. Vehicle according to one of the preceding claims, **characterized in that** the vehicle front surface (14) forms the foremost surface of the vehicle (1) and the vehicle rear surface (16) forms the rearmost surface of the vehicle (1).

4. Vehicle according to one of the preceding claims, **characterized in that** said vehicle is a utility vehicle, and the vehicle front surface (14) comprises a front surface of a driver's cab (140) of the utility vehicle (1).

5. Vehicle according to one of the preceding claims, **characterized in that** it is a single vehicle or a vehicle combination.

6. Vehicle according to one of the preceding claims, **characterized in that**, on the first vehicle side surface (10) and on the second vehicle side surface (12), there is additionally arranged in each case at least one further camera (2e, 2f) which captures a surroundings area of the vehicle (1) not captured by the image capture areas (3a to 3d) of the first camera (2a) and of the second camera (2b) and/or of the third camera (2c) and of the fourth camera (2d).

7. Method for operating a surroundings monitoring device (100) of a vehicle (1), which surroundings monitoring device comprises at least one image capture device (110), one image evaluation device (120) and one image display device (130), comprising at least the following steps:
a) the image capture device (110), which comprises at least two cameras (2a, 2b) which are arranged at vehicle edges of the vehicle (1) and whose image capture areas (3a, 3b) encompass at least a part of the surroundings of a vehicle front surface (14) or of a vehicle rear surface (16) and at least a part of the surroundings of the two vehicle side surfaces (10, 12), captures images of the surroundings of the vehicle (1) and inputs signals representing said images into the image evaluation device (120), **characterized by** at least the following further steps,
b) the images captured by the image capture device (110) and input into the image evaluation device (120) are projected into the ground plane (18) by way of a homographic transformation,
c) based on the images projected into the ground plane (18), at least one object (6) possibly situated in the surroundings of the vehicle (1) is identified by way of integrated object identification algorithms, and the position of said object relative to the vehicle (1) is determined,
d) the images projected into the ground plane (18) are amalgamated in a single representation, and said representation is generated as an aerial perspective (8),
e) the aerial perspective (8) is input into the image display device (130) in order to be displayed there.

## Revendications

1. Véhicule (1) comprenant un dispositif (100) de surveillance de champ, surveillant l'environnement du véhicule, comportant
a) un dispositif (110) de prise d'image, ayant au moins deux caméras (2a, 2b, 2c, 2d), qui enregistrent des images de l'environnement du véhicule (1) et/ou du véhicule (1) soi-même et
b) un agencement de caméra du dispositif (110) de prise d'image, dans lequel une première caméra (2a) est montée dans la région d'un premier bord du véhicule (1) où une première surface (10) latérale du véhicule et une surface (14) avant du véhicule ou une surface (16) arrière du véhicule se rencontrent et dans lequel une deuxième caméra (2b) est disposée dans la région d'un deuxième bord, différent du premier bord, du véhicule (1) où une deuxième surface (12) latérale du véhicule, différente de la première surface (10) latérale du véhicule, et la surface (14) avant du véhicule ou la surface (16) arrière du véhicule se rencontrent, dans lequel
c) le premier dispositif de caméra est disposé, en outre, de façon à ce que la région (3a) de prise d'image de la première caméra (2a) contienne au moins une partie du champ de la première surface (10) latérale du véhicule et au moins une partie du champ de la surface (14) avant du véhicule ou au moins une partie du champ de la surface (16) arrière du véhicule et de manière à ce que la région (3b) de détection d'image de la deuxième caméra (3b) contienne au moins une partie du champ de la deuxième surface (12) latérale du véhicule et au moins une partie du champ de la surface (14) avant du véhicule ou au moins une partie du champs de la surface (16) arrière du véhicule, **caractérisé par**
d) un deuxième agencement de caméra du dispositif (110) de prise d'image, dans lequel une troisième caméra (2c) est montée sur un troisième bord, différent du premier et du deuxième bords du véhicule (1), où la première surface (10) latérale du véhicule et la surface (14) avant du véhicule ou la surface (16) arrière du véhicule se rencontrent, et dans lequel une quatrième caméra (2d) est montée sur un quatrième bord, différent du premier, deuxième et troisième bords du véhicule (1), où la deuxième surface (12) latérale du véhicule et la surface (14) avant du véhicule ou la surface (16) arrière du véhicule se rencontrent, de manière à ce que
e) la région (3b) de prise d'image de la troisième caméra (2c) contienne au moins une partie du champ de la première surface (10) latérale du véhicule et au moins une partie du champ de la surface (14) avant du véhicule, si la au moins une partie du champ de la surface (14) avant du véhicule n'est pas contenue par la région (2a) de prise d'image de la première caméra (2a) ou contienne au moins une partie du champ de la surface (16) arrière du véhicule, si la au moins une partie du champ de la surface (16) arrière du véhicule n'est pas contenue par la région (3) de prise d'image de la première caméra (2a) et
f) la région (3d) de prise d'image de la quatrième caméra (2d) contienne au moins une partie du champ de la deuxième surface (12) latérale du véhicule et au moins une partie du champ de la surface (14) avant du véhicule, si la au moins une partie du champ de la surface (14) avant du véhicule n'est pas contenue par la région (3b) de prise d'image de la deuxième caméra (2b) ou contienne au moins une partie du champ de la surface (16) arrière du véhicule, si la au moins une partie du champ de la surface (16) arrière du véhicule n'est pas contenue par la région (3b) de prise d'image de la deuxième caméra (2b) et dans lequel
g) la première caméra (2a) et la deuxième caméra (2b) et la troisième caméra (2c) et la quatrième caméra (2d) sont montées chacune dans la région d'un point culminant sur le bord qui leur est associé, respectivement, et dans lequel la première région (3a) de prise d'image et la deuxième région (3b) de prise d'image et la troisième région (3c) de prise d'image et la quatrième région (3d) de prise d'image ont, respectivement, un axe médian, qui a une composante verticale et dans lequel
h) il est prévu un dispositif (120) d'exploitation d'image, constitué de manière
h1) à ce que les images, prises par le premier dispositif de caméra et/ou par le deuxième dispositif de caméra et entrées dans le dispositif (120) d'exploitation d'image, soient projetées dans le plan (18) du sol au moyen d'une transformation homographique,
h2) sur la base des images projetées sur le plan (18) du sol, il est détecté, au moyen d'un algorithme intégré de détection d'objet, un objet (6) se trouvant éventuellement dans le champ du véhicule (1) et sa position est déterminée par rapport au véhicule (1),
h3) les images projetées dans le plan (18) du sol sont rassemblées en une représentation unique et cette représentation est produite sous la forme d'une perspective (8) vue à vol d'oiseau,
h4) la perspective (8) vue à vol d'oiseau est entrée dans le dispositif (130) de représentation d'image pour y être présentée.

2. Véhicule suivant la revendication 1, **caractérisé par** un dispositif (135) d'alerte, coopérant avec le dispositif (120) d'exploitation d'image, de manière à produire un signal d'alerte, si l'on passe en dessous d'une distance minimum donnée à l'avance entre la surface (10, 12, 14, 16) du véhicule concerné ou le véhicule (1) et au moins un objet (6) détecté.

3. Véhicule suivant l'une des revendications précédentes, **caractérisé en ce que** la surface (14) avant du véhicule forme la surface la plus en avant du véhicule (1) et la surface (16) arrière du véhicule forme la surface la plus en arrière du véhicule (1).

4. Véhicule suivant l'une des revendications précédentes, **caractérisé en ce que** c'est un véhicule utilitaire et la surface (14) avant du véhicule comporte une surface avant d'une cabine (140) du chauffeur du véhicule (1) utilitaire.

5. Véhicule suivant l'une des revendications précédentes, **caractérisé en ce qu'**il s'agit d'un véhicule individuel ou d'un convoi de véhicules.

6. Véhicule suivant l'une des revendications précédentes, **caractérisé en ce qu'**il est monté, supplémentairement, sur la première surface (10) latérale du véhicule et la deuxième surface (12) latérale du véhicule, respectivement au moins une autre caméra (2e, 2f), par laquelle est détectée une région de champ du véhicule (1) non détectée par les régions (3a à 3d) de détection d'image de la première caméra (2a) et de la deuxième caméra (2b) et/ou de la troisième caméra (2c) et de la quatrième caméra (2d).

7. Procédé pour faire fonctionner un dispositif (100) de surveillance de champ d'un véhicule (1), qui comporte au moins un dispositif (110) de prise d'image, un dispositif (120) d'exploitation d'image, ainsi qu'un dispositif (130) de représentation d'image, comprenant au moins les stades suivants :
a) on enregistre des images du champ du véhicule (1) par le dispositif (110) de prise d'image, qui comporte au moins deux caméras (2a, 2b), qui sont montées sur des bords du véhicule (1) et dont les régions (3a, 3b) de détection d'image comportent au moins une partie d'un champ d'une surface (14) avant du véhicule ou d'une surface (16) arrière du véhicule, ainsi qu'au moins une partie du champ des deux surfaces (10, 12) latérales du véhicule et on introduit des signaux représentant ces images dans le dispositif (120) d'exploitation d'image, **caractérisé par** au moins les autres stades suivants :
b) on projette, dans le plan (18) du sol, au moyen d'une transformation homographique, les images enregistrées par le dispositif (110) de détection d'image et entrées dans le dispositif (120) d'exploitation d'image,
c) sur la base des images projetées dans le plan (18) du sol, on détecte, au moyen d'un algorithme intégré de détection d'objet, au moins un objet (6) se trouvant, éventuellement, dans le champ du véhicule (1) et on en détermine la position par rapport au véhicule (1),
d) on rassemble, en une représentation unique, les images projetées dans le plan (18) du sol et on produit cette représentation sous la forme d'une perspective (8) en vue à vol d'oiseau,
e) on entre la perspective (8) en vue à vol d'oiseau dans le dispositif (130) de représentation d'image pour l'y représenter.
